# EUROPEAN PATENT APPLICATION

(11) **EP 2 624 085 A1**
(43) Date of publication of application: **07.08.2013**
(21) Application number: 10857803.0
(22) Date of filing: 27.09.2010
(51) Int. Cl.: G05B 19/05

(54) **PROGRAMMABLE CONTROL SYSTEM**

(71) Applicant: Mitsubishi Electric Corporation, Tokyo 100-8310 (JP)
(72) Inventor: KINJO, Hideto, Tokyo 100-8310 (JP)
(74) Representative: HOFFMANN EITLE
(86) International application number: PCT/JP2010/066723
(87) International publication number: WO 2012/042588

(57) **Abstract**

To realize a power saving operation by simple handling, a PLC system includes: power-circuit control units 204, 304, and 504 that supply and stop supplying power to each terminal; input/output circuits 202, 302, and 502 that detect whether the terminals 203, 303, and 503 are in a used state; a switching unit 103 that switches an power mode between a power saving mode and a normal mode; a storage unit 102 that stores therein external-wiring state information 105 that is a detection result by the input/output circuit; and control units (a first control unit 101 and second control units 201, 301, and 501) that, when the power mode is in a normal mode, cause the power-circuit control units to supply power to all the terminals and store the detection results related to all the terminals by the input/output circuits as the external-wiring state information 105 in the storage unit 102 and, when the power mode is in a power saving mode, cause the power-circuit control units to stop supplying power to a terminal being designated as a terminal in an unused state in the external-wiring state information 105.

## Description

### Field

The present invention relates to a programmable controller system that controls an industrial controlled device.

### Background

A programmable controller (hereinafter, simply PLC) includes a terminal (a connector) that performs an input/output operation between the PLC and a controlled device. Conventionally, with regard to the PLC, there has been a demand that the PLC should be configured to stop supplying power to a connector to which no wire is connected and a connector that is connected to a controlled device power to which is turned off. For example, Patent Literature 1 mentioned below proposes a technique in which a supply of electric power in a peripheral device control circuit of an electronic device that is connected via a connector is turned off by detecting a disconnection of an external wire from the connector.

### Citation List

### Patent Literature

Patent Literature 1: Japanese Patent Application Laid-open No. H6-266480

### Summary

### Technical Problem

However, according to the conventional technique described above, whether a supply of electric power is to be stopped is determined by the presence of a connector. Accordingly, when making an electronic device in a stopped state, a user cannot stop the supply of electric power unless the connector connected to the target electronic device is disconnected on each occasion.

The present invention has been made in view of the above problems, and an object of the present invention is to provide a programmable controller system that realizes a power saving operation by simple handling. Solution to Problem

To solve the above problems and achieve the object according to an aspect of the present invention, a programmable controller system includes: a plurality of terminals that are connected to an external device; a power supply circuit that supplies and stops supplying power to each terminal; an input/output circuit that detects whether the terminals are in a used state where the terminals are both physically and electrically connected to an external device that is turned on; a switching unit that switches an power mode between a power saving mode for supplying power only to a terminal in a used state and a normal mode for supplying power to all the terminals; a detection-result storage unit that stores therein a detection result by the input/output circuit; and a control unit that causes the power supply circuits to supply power to all of the terminals when the power mode is in a normal mode and causes the power supply circuits to stop supplying power to a terminal being specified as a terminal in an unused state by a detection result stored in the detection-result storage unit when the power mode is in a power saving mode.

### Advantageous Effects of Invention

In the programmable controller system according to the present invention, after changing a wiring state in a normal mode and then switching the mode to a power saving mode by a switching unit, a power supply to a terminal that is not in a used state can be stopped in a state after the wiring state is changed. Accordingly, it is possible to realize a power saving operation by simple handling.

### Brief Description of Drawings

FIG. 1 is a block diagram of a configuration of a PLC system according to an embodiment of the present invention.
FIG. 2 is an explanatory diagram of transition of a state of an operation of the PLC system according to the embodiment of the present invention.

### Description of Embodiments

Exemplary embodiments of a programmable controller system (PLC system) according to the present invention will be explained below in detail with reference to the accompanying drawings. The present invention is not limited to the embodiments.

Embodiment.

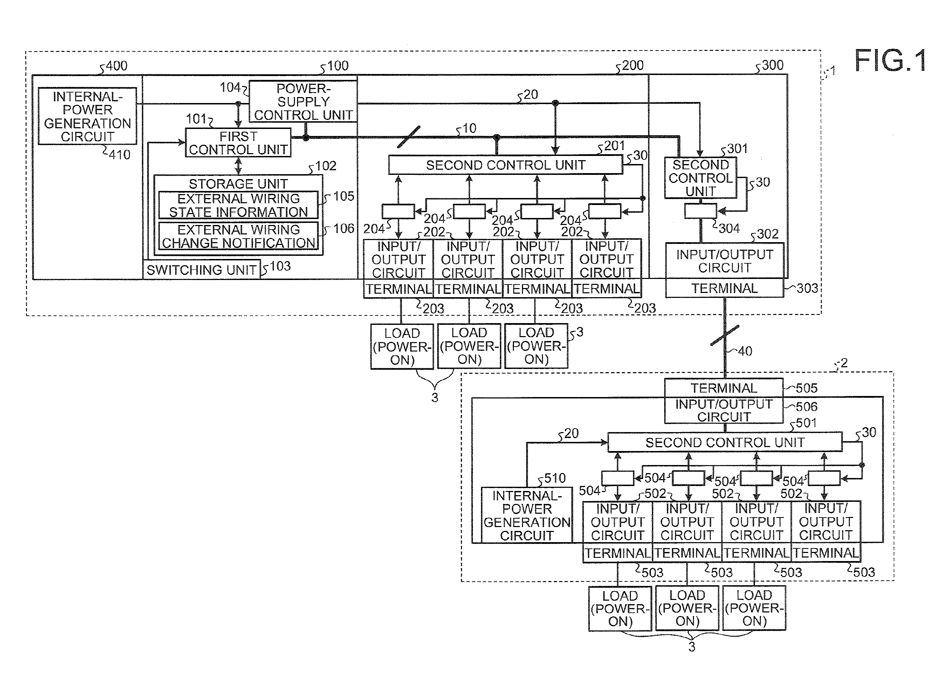

FIG. 1 is a block diagram of a configuration of a PLC system according to an embodiment of the present invention.

As illustrated in FIG. 1, the PLC system according to the present embodiment is configured such that a PLC 1 and a communication slave station 2 are connected to each other. A power unit 400, a CPU unit 100, an I/O unit 200, and a communication unit 300 are connected to constitute the PLC 1. For example, these units constituting the PLC 1 are respectively mounted on a base unit and connected with each other.

The power unit 400 generates internal power that drives the PLC 1. Specifically, an internal-power generation circuit 410 included in the power unit 400 generates internal power. The I/O unit 200 includes a plurality of terminals 203 (four terminals in this case) that are connected to loads 3 as controlled devices, and performs an input/output operation of a control signal between the loads 3 that are connected to the terminals 203. The communication unit 300 is an expansion unit for applying a communication function to the PLC 1, and is mounted on the PLC 1 as needed. The communication unit 300 includes a terminal 303 that is connected to a communication line 40, and communicates with the communication slave station 2 via the communication line 40 that is connected to the terminal 303. The communication slave station 2 includes a plurality of terminals 503 (four terminals in this case) that are connected to the loads 3, and performs an input/output operation between the loads 3 that are connected to the terminals 503. The CPU unit 100 is a control unit that functions as a master with respect to the I/O unit 200, the communication unit 300, and the communication slave station 2, and by executing a user program, controls the I/O unit 200, the communication unit 300, and the communication slave station 2 and also controls an input/output operation to the loads 3 that are connected to the terminals 203 and 503.

According to the embodiment of the present invention, the PLC system detects a terminal which is in an unused state by one unit among from the terminals 203 and 503 and stops electric power supplied to the detected terminal. Furthermore, when the terminal 303 is in an unused state, the PLC system detects the unused state and stops electric power supplied to the terminal 303. The unused state in this case includes: a state where a destination device (in the case of the I/O unit 200 and the communication slave station 2, the destination device corresponds to the loads 3, and in the case of the communication unit 300, the destination device corresponds to the communication slave station 2) is not physically connected to a terminal; a state where, despite being physically connected, the device is not electrically connected due to a disconnection of a connecting wire; and a state where the destination device is turned off. In the present embodiment, a state that is not in an unused state, that is, a state where a device that is turned on is physically and electrically connected to a terminal, is referred to as "used state".

The CPU unit 100 includes a first control unit 101, a storage unit 102, a switching unit 103, and a power-supply control unit 104.

The switching unit 103 is a switch for switching a power mode of a control system between a normal mode and a power saving mode. In the power saving mode, it becomes a state where a supply of electric power to a terminal detected as being in an unused state among the terminals 203, 303, and 503 is stopped. In the present case, the power saving mode means a power mode being in a state where the switching unit 103 is turned on, and the normal mode means a power mode being in a state where the switching unit 103 is turned off.

The first control unit 101 is driven by internal power that is generated by the internal-power generation circuit 410, and functions as a control unit of the PLC system in cooperation with second control units 201, 301, and 501 described later. For example, the first control unit 101 is constituted by a microcomputer. The first control unit 101 stores external-wiring state information 105 describing whether the terminals 203, 303, and 503 are in an unused state by each terminal in the storage unit 102; and issues a bus signal, by designating a terminal being in an unused state for stopping a supply of electric power to the designated terminal, to the corresponding second control units 201, 301, and 501 via a bus 10. Furthermore, the first control unit 101 detects a change in a state between a used state and an unused state (hereinafter, simply "wiring state") of each terminal based on the external-wiring state information 105 stored in the storage unit 102, and when a change occurs in the wiring state, abnormality processing is performed or the external-wiring state information 105 is updated. For example, displaying a warning on a programmable display or a programming device (both not shown) and notifying a warning by sound correspond to the abnormality processing.

For example, the storage unit 102 is constituted by a rewritable storage device such as a RAM (Random Access Memory), and stores therein the external-wiring state information 105 described above. The storage unit 102 also stores therein an external-wiring change notification 106 that is input from software or the like by a user in advance when the user handles a wire during an operation of a normal mode. The storage unit that stores therein the external-wiring state information 105 does not have to be the same as a unit that stores therein the external-wiring change notification 106.

The power-supply control unit 104 supplies internal power generated by the internal-power generation circuit 410 to the I/O unit 200 and the communication unit 300 via a power supply line 20.

The I/O unit 300 includes: four terminals 203; four input/output circuits 202 that are respectively connected to one of the terminals 203 one by one and detect wiring states of the connected terminals 203; four power-circuit control units 204 that are respectively connected to one of the input/output circuits 202 one by one and individually supply and stop supplying power to the connected input/output circuits 202 and the terminals 203; and the second control unit 201. When power is supplied to the input/output circuit 202 itself, the input/output circuit 202 senses a current flowing in the corresponding terminal 203 by using the power to detect a wiring state of the terminal 203. The second control unit 201 is connected to the first control unit 101 via the bus 10, and upon reception of a bus signal indicating stopping of the terminal 203 being in an unused state from the first control unit 101, issues a supplying-power stop signal 30 to the power-circuit control unit 204 that supplies electric power to the terminal 203 designated by the bus signal.

Although the supplying-power stop signal 30 is illustrated in FIG. 1 such that it is branched and connected to the four power-circuit control units 204, actually the supplying-power stop signal 30 is connected to the four respective power-circuit control units 204 one by one. Issuing the supplying-power stop signal 30 means that the supplying-power stop signal 30 connected to the target terminal 203 is asserted.

Power is supplied to the power-circuit control units 204 from the power-supply control unit 104 (a power supply line to the power-circuit control units 204 is not shown in FIG. 1), and the power-circuit control units 204 respectively supply power to the corresponding input/output circuits 202 and the terminals 203. When the supplying-power stop signal 30 is issued, the power-circuit control units 204 stop supplying the power to the corresponding input/output circuits 202 and the terminals 203.

The input/output circuit 202 detects a wiring state of the corresponding terminal 203 by using supplied power. The detection result is transmitted to the second control unit 201 via the corresponding power-circuit control unit 204. The second control unit 201 transmits wiring states of each of the terminals 203 to the first control unit 101.

In addition to the terminal 303 for connecting the communication unit 300 to the communication line 40, the communication unit 300 includes the second control unit 301, an input/output circuit 302, and a power-circuit control unit 304. Functions of the second control unit 301, the input/output circuit 302, and the power-circuit control unit 304 are respectively the same as those of the second control unit 201, the input/output circuit 202, and the power-circuit control unit 204. That is, the second control unit 301 is connected to the first control unit 101 via the bus 10, and upon reception of a bus signal indicating stopping of a supply of electric power to the terminal 303 being in an unused state from the first control unit 101, issues the supplying-power stop signal 30 to the power-circuit control unit 304 that supplies electric power to the designated terminal 303. The power-circuit control unit 304 supplies power to the input/output circuit 302 and the terminal 303. When the supplying-power stop signal 30 is issued, the power-circuit control unit 304 stops supplying power to the input/output circuit 302 and the terminal 303. The input/output circuit 302 detects a wiring state of the terminal 303 by using the supplied power. The detection result is transmitted to the second control unit 301 via the power-circuit control unit 304. The second control unit 301 transmits the wiring state of the terminal 303 to the first control unit 101.

The communication slave station 2 includes the same internal configuration as that of the I/O unit 200, except for including an internal-power generation circuit 510 that is independent from the PLC 1, a terminal 505 that is connected to the communication line 40, and an input/output circuit 506 that performs an input/output operation via the terminal 505. Specifically, in addition to four terminals 503 connected to the loads 3, the communication slave station 2 includes: four input/output circuits 502 that are respectively connected to one of the terminals 503 one by one and detect wiring states of the connected terminals 503; four power-circuit control units 504 that are respectively connected to one of the input/output circuits 502 one by one and supply and stop supplying power to the connected input/output circuits 502 and the terminals 503; and the second control unit 501. Upon reception of a bus signal indicating stopping of a supply of electric power to the terminal 503 being in an unused state from the first control unit 101 via the bus 10 and the communication line 40, the second control unit 501 issues the supplying-power stop signal 30 to the power-circuit control unit 504 that supplies electric power to the designated terminal 503. The second control unit 501 is driven by internal power that is supplied from the internal-power generation circuit 510 via the power supply line 20.

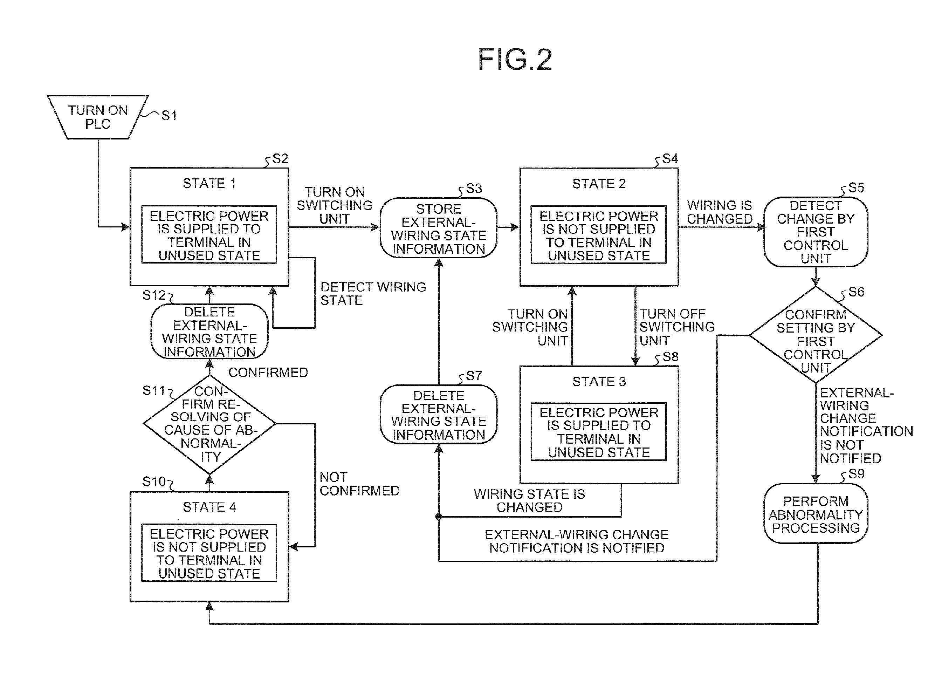

FIG. 2 is an explanatory diagram of transition of a state of an operation of the PLC system according to the embodiment of the present invention. First, when the PLC 1 is turned on (Step S1), the PLC 1 transits to a state 1 (Step S2). In the state 1, the switching unit 103 is in a state of turned off and the power mode is in a normal mode. That is, power is supplied to all of the terminals 203, 303, and 503. In this state, each of the input/output circuits 202 keep detecting wiring states of the corresponding terminals 203 and keep inputting detection results into the second control unit 201. Furthermore, the input/output circuit 302 keeps detecting a wiring state of the terminal 303 and keeps inputting detection results into the second control unit 301. Further, each of the input/output circuits 502 keeps detecting wiring states of the corresponding terminals 503 and keeps inputting detection results into the second control unit 501.

When the switching unit 103 is turned on in the state 1, the first control unit 101 stores detection results of the wiring states of the respective terminals, which are detected at the time of the switching unit 103 being turned on and are transmitted from the second control units 201, 301, and 501 in the storage unit 102 as the external-wiring state information 105 (Step S3), and the state of the PLC system becomes a state 2 (Step S4). Operations related to the second control units, power control circuits, input/output circuits, and terminals respectively included in the I/O unit 200, the communication unit 300, and the communication slave station 2 are the same with each other. Therefore, in order to simplify explanations, in the following descriptions, an explanation about operations of constituent elements of the I/O unit 200 is selected as a representative of explanations about operations of constituent elements of the I/O unit 200, the communication unit 300, and the communication slave station 2.

When the state transits to the state 2, the first control unit 101 transmits a bus signal indicating stopping of a power supply to the terminal 203 recorded in the external-wiring state information 105 as a terminal being in an unused state to the second control unit 201; and upon reception of the bus signal, the second control unit 201 issues the supplying-power stop signal 30 to the power-circuit control units 204 corresponding to the target terminal 203 to which the power supply is to be stopped. Accordingly, in the state 2, the power supply to the terminal 203 that is recorded in the external-wiring state information 105 as a terminal being in an unused state and to the corresponding input/output circuit 202 is in a stopped state. That is, the power mode is in a power saving mode.

In the state 2, power is supplied to the terminal 203 that is recorded in the external-wiring state information 105 as a terminal in a used state and to the corresponding input/output circuit 202. The input/output circuit 202 to which power is supplied keeps detecting a wiring state of the corresponding terminal 203. In the state 2, when the load 3 that is connected to the terminal 203 to which power is supplied is turned off and when a wire is pulled out or disconnected, the detection result related to the terminal 203 to which power is supplied change from a used state to an unused state. The first control unit 101 periodically compares the detection result that is transmitted from the second control unit 201 with the external-wiring state information 105 that is stored in the storage unit 102. When a change in a state of the terminal 203 occurs, a discrepancy occurs between the detection result and the external-wiring state information 105. When the discrepancy is recognized, the first control unit 101 detects that the wiring state of the terminal 203 has changed (Step S5).

As one of the methods of changing a wiring by a user, there is a method of inputting the external-wiring change notification 106 in advance. After detecting a change in the wiring state of the terminal 203 at Step S5, the first control unit 101 checks the storage unit 102 to determine whether the external-wiring change notification 106 has been input in advance (Step S6). When the external-wiring change notification 106 has been input, the first control unit 101 deletes the external-wiring state information 105 stored in the storage unit 102 (Step S7), and the process proceeds to Step S3.

That is, by inputting the external-wiring change notification 106 in advance, when the power mode is in a power saving mode, a user can perform hot-swap and turn off the load 3 without causing any abnormality processing described later. Furthermore, the user can automatically stop the power supplied to the terminal 203 that has become an unused state by a change of a wiring.

As another method of changing a wiring by a user, there is a method of turning off the switching unit 103 at the time of changing a wiring. When the switching unit 103 is turned off in the state 2, the process proceeds to a state 3 (Step S8). When the process proceeds to the state 3, the first control unit 101 transmits a bus signal indicating a supply of power to all the terminals to the second control unit 201, and upon reception of the bus signal, the second control unit 201 cancels the supplying-power stop signal 30 and supplies power to all of the terminals and the input/output circuits 202. That is, the power mode is in a normal mode in the state 3.

In the state 3, all the input/output circuits 202 keep detecting wiring states of the terminals 203. When the wiring state of the terminal 203 changes, the first control unit 101 detects the change in the wiring state by comparing the detection result received via the second control unit 201 with the external-wiring state information 105 stored in the storage unit 102 and deletes the external-wiring state information 105 (Step S7). The process then proceeds to the state 3 (Step S8) through Step S3 and Step S4. When the switching unit 103 is turned on in the state 3, the process proceeds to the state 2 (Step S4).

That is, after turning off the switching unit 103 to perform hot-swap and to turn on and off the load 3, when turning on the switching unit 103, a user can stop supplying power to a terminal that is in an unused state at a time when the wiring is changed.

In a determination at Step S6, when it is determined that a change of an external wiring is not notified, the first control unit 101 performs abnormality processing (Step S9) and the process proceeds to a state 4 (Step S10).

That is, when a disconnection of a wire occurs in a power saving mode, and when the user does not input the external-wiring change notification 106 and changes a wiring state without turning off the switching unit 103, the abnormality processing is performed.

In the state 4, the power mode still remains in a power saving mode. The first control unit 101 monitors a state of the terminal 203 to which power is supplied to determine whether an abnormality is resolved (Step S11), and when the abnormality is not resolved, the process proceeds to Step S10. When all the detection results related to the terminal 203 to which power is supplied indicate a used state, the first control unit 101 can determine that the abnormality is resolved. For example, if there is a disconnection of a wire, an abnormality is resolved when the disconnection of the wire is repaired. Furthermore, in the case where a user does not input the external-wire change notification 106 and changes a wire state without turning off the switching unit 103, an abnormality is resolved by recovering the change. When it is determined that an abnormality is resolved, the first control unit 101 deletes the external-wiring state information 105 stored in the storage unit 102 (Step S12), and the process proceeds to Step S2 and the state transits to the state 1.

The operations described in FIG. 2 are explained with a more specific example. In the following explanations, it is assumed that the switching unit 103 is configured to serve also as a RUN switch of the PLC 1.

After a user completes a start-up procedure such as wiring the load 3 and turning the load 3 on, by turning the RUN switch (the switching unit 103) on, an execution of a user program is started and a supply of electric power to the terminal 203 being in an unused state is stopped and the power mode turns into a power saving mode (Step S1 to Step S4). The storage unit 102 stores therein the external-wiring state information 105 indicating that the terminal 203 connected to the load 3 that is turned on is in a used state, and the terminal 203 connected to the load 3 that is turned off and the terminal 203 not connected to the load 3 are in an unused state (Step S3).

In a state where the user program is executed in a power saving mode, when the wiring of the terminal 203 to which power is supplied is pulled out and when the load 3 is turned off, a change in a wiring state of the terminal 203 is detected. At this time, when the external-wiring change notification 106 is input and stored in the storage unit 102 in advance, abnormality processing is not performed but the external-wiring state information 105 is updated and the a supply of electric power to the terminal 203 of which the wiring state is changed is stopped (Step S5, Step S6, Step S7, Step S3, and Step S4). When the external-wiring change notification 106 is not input, the abnormality processing is performed (Step S9). When a user restores the wiring state of the terminal 203, which is changed by the abnormality processing, the execution of the user program in a power saving mode is restarted (Steps S10 to S12, and Steps S2 to S4).

When the RUN switch is turned off in the state where the user program is executed in a power saving mode, the user program stops and the power mode transits to a normal mode (Step S8). In this state, when a user performs hot-swap of the terminal 203 and turns on/off the load 3, the change in the wiring state is reflected on the external-wiring state information 105 (Step S7, Step S3, Step S4, and Step S8). Subsequently, when a user turns the RUN switch on after changing the wiring state, the execution of the user program is restarted and power supply to the terminal 203 being in an unused state is stopped in a wiring state after handling is reflected based on the external-wiring state information 105.

In the specific example described above, the switching unit 103 is configured to serve also as the RUN switch; however, the switching unit 103 may be configured to be automatically switched on and off by a timer. Furthermore, the switching unit 103 itself may be an independent hardware switch (or a software switch). When the switching unit 103 is provided independently, a wiring can be changed without stopping a user program.

As described above, the programmable controller system according to the embodiment of the present invention is configured to include: the power-circuit control units (power supply circuits) 204, 304, and 504 that supply and stop supplying power to each terminal; the input/output circuits 202, 302, and 502 that detect whether the terminals 203, 303, and 503 are in a used state where these terminals are both physically and electrically connected to external devices that are turned on for each terminal; the switching unit 103 for switching the power mode between a power saving mode for supplying power only to a terminal in a used state and a normal mode for supplying power to all the terminals; the storage unit 102 (detection-result storage unit) that stores therein the external-wiring state information 105 that is a detection result by the input/output circuit; and the control units (the first control unit 101 and the second control units 201, 301, and 501) that, when the power mode is in a normal mode, supply power to all the terminals and store the detection results related to all the terminals by the input/output circuits as the external-wiring state information 105 in the storage unit 102 and, when the power mode is in a power saving mode, cause the power-circuit control unit to stop supplying power to a terminal being specified as a terminal being in an unused state by the external-wiring state information 105. Accordingly, after changing a wiring state by turning off the switching unit 103, and when the switching unit 103 is turned on, a power supply to a terminal being in an unused state can be stopped in a state after the wiring state is changed. Therefore, it is possible to realize a power saving operation by simple handling.

Furthermore, the control units (the first control unit 101 and the second control units 201, 301, and 501) are configured to monitor a detection result by the input/output circuit when the power mode is in a power saving mode, and these control units are configured to notify an abnormality in a case where there is a difference between the detection result by the input/output circuit and the external-wiring state information 105. Therefore, when a disconnection of a wire in an operation in a power saving mode, an unintended turning off of an external device, or pulling out of a wire occurs, such unintended changes in the wiring state can be notified to a user.

Furthermore, the storage unit 102 that stores therein the external-wiring change notification 106 input by a user is provided, and the control units (the first control unit 101 and the second control units 201, 301, and 501) update the external-wiring state information 105 with a detection result by the input/output circuit in a case where the detection result by the input/output circuit is different from the external-wiring state information 105 and when the external-wiring change notification 106 is stored in the storage unit 102. Meanwhile, when the external-wiring change notification 106 is not stored in the storage unit 102, the control units notify an abnormality. With this configuration, a user can perform hot-swap and turn off an external device without causing abnormality processing by inputting the external-wiring change notification 106 in advance, and can automatically stop power supplied to a terminal being in an unused state by a change of a wiring.

The configurations of the terminals, the input/output circuits, the power-supply control units, and the second control units described above which are commonly applicable to the I/O unit 200, the communication unit 300 and the communication slave station 2 can be applied to any units as long as these units include a terminal connected to an external device and operate as slaves with respect to the CPU unit 100. For example, these elements can be applied to a motion controller unit to which a servo amplifier is connected and a temperature control unit to which a temperature sensor and a thyristor are connected.

When there is a unit that does not include a terminal stored in the external-wiring state information 105 as a terminal in a used state, the power-supply control unit 104 may be configured to stop supplying power to the terminal in a power saving mode.

The external-wiring state information 105 may be configured to be editable from a programming device or a programmable display, and in the state 3, the external-wire state information 105 may be configured to be manually editable by a user, instead of updating the external-wiring state information 105 by automatically detecting a change in a wiring state by the first control unit 101.

### Industrial Applicability

As described above, the programmable controller system according to the present invention is suitable to be applied to a programmable controller system that controls an industrial controlled device.

### Reference Signs List

- 1: PLC
- 2: communication slave station
- 3: load
- 10: bus
- 20: power supply line
- 30: supplying-power stop signal
- 40: communication line
- 100: CPU unit
- 101: first control unit
- 102: storage unit
- 103: switching unit
- 104: power-supply control unit
- 105: external-wiring state information
- 106: external-wiring change notification
- 200: I/O unit
- 201: second control unit
- 202: input/output circuit
- 203: terminal
- 204: power-circuit control unit
- 300: communication unit
- 301: second control unit
- 302: input/output circuit
- 303: terminal
- 304: power-circuit control unit
- 400: power unit
- 410: internal-power generation circuit
- 501: second control unit
- 502: input/output circuit
- 503: terminal
- 504: power-circuit control unit
- 505: terminal
- 506: input/output circuit
- 510: internal-power generation circuit

## Claims

1. A programmable controller system comprising:
a plurality of terminals that are connected to an external device;
a power supply circuit that supplies and stops supplying power to each terminal;
an input/output circuit that detects whether the terminals are in a used state where the terminals are both physically and electrically connected to an external device that is turned on;
a switching unit that switches an power mode between a power saving mode for supplying power only to a terminal in a used state and a normal mode for supplying power to all the terminals;
a detection-result storage unit that stores therein a detection result by the input/output circuit; and
a control unit that causes the power supply circuits to supply power to all of the terminals when the power mode is in a normal mode and causes the power supply circuits to stop supplying power to a terminal being specified as a terminal in an unused state by a detection result stored in the detection-result storage unit when the power mode is in a power saving mode.

2. The programmable controller system according to claim 1, wherein the control unit monitors a detection result by the input/output circuit when the power mode is in a power saving mode, and in a case where there is a difference between the detection result by the input/output circuit and a detection result stored in the detection-result storage unit, the control unit notifies an abnormality.

3. The programmable controller system according to claim 2, further comprising a notification storage unit that stores therein a wiring change notification input by a user, wherein
in a case where there is a difference between the detection result by the input/output circuit and the detection result stored in the detection-result storage unit, when the wiring change notification is stored in the notification storage unit, the control unit updates the detection result stored in the detection-result storage unit with the detection result by the input/output circuit and, when the wiring change notification is not stored in the notification storage unit, the control unit notifies an abnormality.

4. The programmable controller system according to claim 1, wherein the input/output circuits are included in each terminal and detect whether the terminals are in a used state by using power supplied to the terminals.
